Europäisches Patentamt

(19) European Patent Office

Office européen des brevets

(11) Veröffentlichungsnummer: **0 009 772**
**B1**

(12) **EUROPÄISCHE PATENTSCHRIFT**

(45) Veröffentlichungstag der Patentschrift:
06.01.82

(51) Int. Cl.³: **C 08 F 20/12**, C 08 F 2/30

(21) Anmeldenummer: **79103668.4**

(22) Anmeldetag: **27.09.79**

(54) **Verfahren zur Herstellung von wässrigen Polyacrylat-Dispersionen mit verbessertem Fliessverhalten.**

(30) Priorität: **30.09.78 DE 2842719**

(43) Veröffentlichungstag der Anmeldung:
**16.04.80 Patentblatt 80/8**

(45) Bekanntmachung des Hinweises auf die Patenterteilung:
**06.01.82 Patentblatt 82/1**

(84) Benannte Vertragsstaaten:
**AT BE CH DE FR GB IT NL SE**

(56) Entgegenhaltungen:
**DE-A-1 942 423**
**GB-A-1 466 660**
**US-A-3 513 120**
**US-A-4 064 337**
**CHEMICAL ABSTRACTS, Vol. 73, Nr. 8, 24. August 1970, Zusammenfassung Nr. 36152x, Seite 26, Columbus, Ohio, USA**

(73) Patentinhaber: **BASF Aktiengesellschaft, Carl-Bosch-Strasse 38, D-6700 Ludwigshafen (DE)**

(72) Erfinder: **Mueller-Mall, Rudolf, Dr. Dipl.-Chem., Battstrasse 10, D-7500 Karlsruhe 1 (DE)**
Erfinder: **Wendel, Kurt, Dr. Dipl.-Chem., Beethovenstrasse 8, D-6700 Ludwigshafen (DE)**
Erfinder: **Geelhaar, Hans Joachim, Dr. Dipl.-Chem., Max-Slevogt-Strasse 7, D-6710 Frankenthal (DE)**
Erfinder: **Melan, Michael, Dr. Dipl.-Chem., Hans-Willmann-Strasse 4, D-6706 Wachenheim (DE)**

## Verfahren zur Herstellung von wäßrigen Polyacrylat-Dispersionen
## mit verbessertem Fließverhalten

Diese Erfindung betrifft ein Verfahren zur Herstellung von wäßrigen Polyacrylat-Dispersionen mit verbessertem Fließverhalten, wie sie insbesondere als Bindemittel für Anstrichmittel eingesetzt werden.

Es ist schon lange bekannt, daß man wäßrige Polyacrylat-Dispersionen durch Polymerisation von Acryl- und/oder Methacrylsäureestern 1 bis 10 C-Atome enthaltender Alkanole mit 0 bis 50 Gew.-% Styrol und/oder 0 bis 20 Gew.-% Vinylestern und/oder 0 bis 10 Gew.-% wasserlöslichen monoolefinisch ungesättigten Comonomeren wie Acrylsäure, Methacrylsäure, Itaconsäure, Acrylamid, Methacrylamid usw. durch Polymerisation der Monomeren in wäßriger Emulsion bei 30 bis 95° C in Gegenwart radikalbildender Polymerisationsinitiatoren, wie besonders wasserlöslichen Peroxiden, z. B. Persulfaten, herstellen kann. Dabei werden im allgemeinen anionische und/oder nichtionische Emulgatoren in Mengen von 0,5 bis 5 Gew.-% eingesetzt. Die Emulsionspolymerisation wird dabei im allgemeinen ansatzweise durchgeführt, wobei die Monomeren zum Teil in einer wäßrigen Vorlage, die Polymerisationsinitiator und Emulgator enthält, vorgelegt und die restlichen Monomeren nach dem Anspringen der Emulsionspolymerisation bei erhöhter Temperatur als solche oder in Form einer wäßrigen Emulsion zugefahren werden. Die rheologischen Eigenschaften der nach diesen bekannten Verfahren hergestellten Polyacrylat-Dispersionen läßt jedoch beim Einsatz als Anstrichmittel bzw. Bindemittel für Anstrichmittel zu wünschen übrig, wobei oft bei guter Füllbarkeit der Dispersionen ein verbessertes Fließverhalten gewünscht wird.

Zur Erhöhung der Viskosität von Polyacrylat-Dispersionen hat man schon Schutzkolloide, wie Polyvinylalkohole, Hydroxyäthylcellulosen und Vinylpyrrolidon-Copolymerisate nach der Polymerisation zugesetzt. Dabei wird zwar die Verträglichkeit mit den in Anstrichmitteln verwendeten Pigmenten erhöht, jedoch nimmt die Wasserempfindlichkeit der Filme aus solchen Dispersionen drastisch zu. Zur Erzielung eines besseren Fließverhaltens und zur Einsparung von nachträglich zuzusetzendem Schutzkolloid hat man auch schon die Emulsionspolymerisation von Acrylsäureestern in Gegenwart von Schutzkolloiden durchgeführt. Dabei tritt jedoch, insbesondere bei der Emulsionspolymerisation ausschließlich von Acrylsäureestern (d. h. ohne Comonomere wie Vinylester) oft Koagulation ein oder es werden hochviskose, schlecht fließende Polyacrylat-Dispersionen erhalten, die sich nicht als Bindemittel für Anstrichmittel eignen. Des weiteren hat man schon bei dem Verfahren der GB-PS 1 155 275 versucht, bei der Emulsionspolymerisation von Acrylsäureestern Schutzkolloid erst nach einem bestimmten Umsatz in das Polymerisationsgemisch zu geben. Es ist jedoch schwierig, diesen Umsatz richtig zu wählen, so daß eine reproduzierbare Viskositätseinstellung nur bedingt möglich ist.

Schließlich ist es auch bekannt, bei der Emulsionspolymerisation von Acrylsäureestern Regler sowie gegebenenfalls zusätzlich Schutzkolloide mitzuverwenden (vgl. GB-PS 1 466 660, DE-OS 2 256 154 (entspricht der US-PS 3 876 596), GB-PS 1 277 877, GB-PS 1 152 860, DE-OS 2 620 189 (der die GB-PS 1 524 018 und die bekanntgemachte südafrikanische Patentanmeldung 77/2690 entsprechen) und GB-PS 912 068). Als Regler werden dabei Alkyl- und Arylmercaptane, wie besonders Dodecylmercaptan genannt, die in Wasser praktisch nicht löslich sind, doch müssen dabei verhältnismäßig hohe Konzentrationen an Regler gewählt werden, die zu Geruchsbelästigungen führen können.

Es wurde nun gefunden, daß man wäßrige Polyacrylat-Dispersionen mit verbessertem Fließverhalten durch Polymerisieren von Acryl- und/oder Methacrylsäureestern 1 bis 10 C-Atome enthaltender Alkanole mit 0 bis 50 Gew.-% Styrol und/oder 0 bis 20 Gew.-% Vinylestern und/oder 0 bis 10 Gew.-% wasserlöslichen monoolefinisch ungesättigten Comonomeren unter Emulsionszulauf der Monomeren in wäßriger Emulsion bei 30 bis 95°C in Gegenwart üblicher radikalbildender Polymerisationsinitiatoren, von 0,01 bis 2 Gew.-% Schutzkolloiden, 0,5 bis 5 Gew.-% nichtionischen Emulgatoren und von 0,05 bis 5 Gew.-% Reglern, wobei die Gewichtsprozente jeweils auf die Gesamtmenge der Monomeren bezogen sind, mit Vorteil herstellen kann, wenn man

(a) das Schutzkolloid zumindest zum Teil in einer geringe Anteile der Monomeren enthaltenden wäßrigen Vorlage vorlegt und

(b) einen wasserlöslichen Regler in Vorlage und gegebenenfalls zusätzlich in Zulauf einsetzt, dessen Löslichkeit in Wasser bei 20% mindestens 50 g/Liter beträgt.

Als Acryl- und/oder Methacrylsäureester kommen vor allem die der 1 bis 4 C-Atome enthaltenden Alkanole, Methanol, Äthanol, n-Propanol, N-Butanol und Isobutanol in Frage sowie ferner die des 2-Äthylhexanols. Von besonderem Interesse sind Methylmethacrylat, Äthylacrylat, n-Butylacrylat und Isobutylacrylat sowie ferner 2-Äthylhexylacrylat und -methacrylat. Tertiär-Butylacrylat und -methacrylat kommen gleichfalls als Monomeres in Frage.

Als Vinylester kommen vor allem Vinylacetat, Vinylpropionat, Vinyllaurat und Vinylpivalat in Frage. Geeignete wasserlösliche monoolefinisch ungesättigte Comonomere sind besonders $\delta$, $\beta$-monoolefinisch ungesättigte Mono- und Dicarbonsäuren mit vorzugsweise 3 bis 5 C-Atomen sowie deren gegebenenfalls an den Stickstoffatomen substituierte Amide und ferner Monoalkylester 1 bis 4 C-Atome enthaltender Alkanole mit 4 oder 5 C-Atomen enthaltenden $\alpha$,$\beta$-monoolefinisch

ungesättigten Dicarbonsäuren sowie Vinylsulfonsäure und deren wasserlösliche Salze; Beispiele hierfür sind vor allem Acrylsäure, Methacrylsäure, Itaconsäure, Acrylsäureamid, Methacrylsäureamid, Maleinsäuremonoäthylester, Maleinsäuremonomethylester, Maleinsäuremonoäthylester, Maleinsäuremonomethylester, Maleinsäuremono-n-butylester, N-Methylacrylamid, N-n-Butyl-methacrylamid, meist 1 bis 4 C-Atome im Alkylrest enthaltende N-Alkylolamide der Acryl- und Methacrylsäure, wie N-Methylolacryl- und Methacrylamid, N-n-Butoxymethylacrylamid und N-Äthoxymethyl-methacrylamid. Der Anteil derartiger wasserlöslicher Comonomerer an den Copolymerisaten liegt meist zwischen 0,1 und 7 Gew.-% und beträgt vorzugsweise 0,5 bis 5 Gew.-% bezogen auf die Gesamtmenge der Monomeren.

Als Schutzkolloide, die vorzugsweise in Mengen von 0,05 bis 1,5 Gew.-% eingesetzt werden, kommen vor allem Hydroxyalkylcellulosen einer Viskosität ihrer 2%igen wäßrigen Lösung bei 20° C von 10 bis 1000 mPa·s, insbesondere Hydroxyäthylcellulosen in Frage sowie ferner Polyvinylalkohole und wasserlösliche Polymerisate des N-Vinylpyrrolidons, die meist K-Werte (bestimmt nach H. Fikentscher, Cellulosechemie Band 13, Seiten 58 ff [1932]) von 30 bis 150, insbesondere 50 bis 100 aufweisen und die im allgemeinen mindestens 20, vorzugsweise 40 bis 100% ihres Gewichts an Vinylpyrrolidon einpolymerisiert enthalten und als Comonomere $\alpha,\beta$-monoolefinisch ungesättigte, meist 3 bis 5 C-Atome enthaltende Mono- und/oder Dicarbonsäuren und/oder deren Amide, wie besonders Acrylamid und Methacrylamid, sowie auch in Mengen von 0 bis 30 Gew.-% niedere Acrylester, im allgemeinen 1 oder 2 C-Atome enthaltende Alkanole, wie besonders Methylacrylat und/oder niedere Vinylester, wie besonders Vinylacetat und Vinylpropionat einpolymerisiert enthalten. Geeignet sind ferner übliche Carboxymethylcellulosen.

Die mitzuverwendenden nichtionischen Emulgatoren werden vorzugsweise in einer Menge von 1 bis 3 Gew.-% bezogen auf die Monomeren eingesetzt. Geeignet sind besonders oxalkylierte, vorzugsweise oxäthylierte Fettalkohole, Fettamine, Fettsäureamide und/oder meist 8 bis 12 C-Atome in der Alkylgruppe enthaltende Monoalkylphenole, die 5 bis 30, insbesondere 10 bis 25 Äthylenoxid-Einheiten im Molekül enthalten, z. B. oxäthylierter Laurylalkohol, oxäthylierter Oleylalkohol, oxäthylierter Spermölalkohol und oxäthylierter Stearylalkohol, oxäthylierter Stearinsäureamid, oxäthyliertes Oleylamid, oxäthylierte Ölsäure, oxäthyliertes p-n-Nonylphenol, oxäthyliertes p-Isooctylphenol und oxäthyliertes p-n-Dodecylphenol. Zusätzlich zu den nichtionischen Emulgatoren können auch anionische Emulgatoren mitverwendet werden, deren Menge 0 bis 3, vorzugsweise 0,5 bis 2 Gew.-%, bezogen auf die Monomerenmenge, beträgt. Geeignete anionische Emulgatoren sind vorzugsweise Schwefelsäureester von Fettalkoholen, wie Laurylsulfat, Sulfierungsprodukte von oxalkylierten, insbesondere oxäthylierten, meist 8 bis 12 C-Atome im Alkylrest enthaltenden Alkylphenolen, wie besonders p-n-Nonyl- und p-n-Dodecylphenol sowie p-Isooctylphenol, wasserlösliche Alkalisalze von Fettsäuren, wie Natriumstearat und Natriumoleat und sulfonierte und alkylierte Bisphenyläther.

Für das neue Verfahren von ausschlaggebender Bedeutung ist die Mitverwendung von wasserlöslichen Reglern. Ihre Menge beträgt vorzugsweise 0,1 bis 0,5 Gew.-%, bezogen auf die Gesamtmenge der Monomeren. Die Wasserlöslichkeit der Regler soll im allgemeinen bei Raumtemperatur, d. h. bei 20° C, mindestens 50 g/l, vorzugsweise mindestens 100 g/l betragen. Als wasserlöslicher Regler kommt vor allem Thioglykolsäure und Thiodiglykol sowie ferner Buten-1-ol-(3), Isopropanol, Vinylglykol, Cyclohexylamin-Hydrochlorid, Hydroxylammoniumsulfat, Buten(2)-diol-(1,4) und Thiodiessigsäure in Frage. Übliche Regler, wie Didecylmercaptan, deren Löslichkeit in Wasser weniger als 10 g/l beträgt, sind für das vorliegende Verfahren nicht geeignet, da sie die Viskosität der Dispersion nicht im notwendigen Maß erniedrigen und zu pastösem, stockendem Fließverhalten führen.

Bei dem erfindungsgemäßen Verfahren arbeitet man auch dem sogenannten Emulsions-Zulaufverfahren, bei dem ein Anteil der gesamten Monomeren von meist 10 bis 30% in einer wäßrigen Vorlage vorgelegt wird, die einen Anteil der radikalbildenden Polymerisationsinitiatoren, Schutzkolloid, Emulgatoren und Regler enthält. Die Vorlage wird im allgemeinen auf Polymerisationstemperatur aufgeheizt und nach dem Anspringen der Polymerisation die restlichen Monomeren als wäßrige Emulsion zusammen oder getrennt vom restlichen Polymerisationsinitiator, Regler, Schutzkolloid und Emulgatoren zugeführt. Die Zugabe der emulgierten, restlichen Monomeren kann in gleichen oder wechselnden diskreten Anteilen oder vorzugsweise kontinuierlich nach Maßgabe der Polymerisation erfolgen. Bei dem neuen Verfahren kann das Verhältnis von wasserlöslichem Regler zu Emulgatoren zu Schutzkolloid zu Monomeren in der Vorlage gleich oder verschieden sein zu jenem Verhältnis im Emulsions-Zulauf. Auch kann das Verhältnis von Monomeren zu wäßriger Phase in Vorlage und Emulsions-Zulauf gleich oder verschieden sein; es liegt im allgemeinen zwischen 4 : 100 und 60 : 100.

Bei einer bevorzugten Ausführungsform des Verfahrens wird von dem wasserlöslichen Regler nur ein Anteil, z. B. 10 bis 50%, vorzugsweise 20 bis 30% seines Gesamtgewichts in der wäßrigen Vorlage vorgelegt und der restliche Anteil dem Polymerisationsgemisch während des Emulsions- bzw. Monomeren-Zulaufs in je Zeiteinheit zunehmenden Mengen zugeführt. Dies kann besonders vorteilhaft dadurch erreicht werden, daß man den nicht vorgelegten Anteil des Reglers zusammen mit dem Emulsions-Zulauf derart zuführt, daß man seine Konzentration im Emulsionszulauf während der gesamten Zulaufdauer kontinuierlich erhöht. Praktisch kann dies z. B. dadurch erfolgen, daß man dem Emulsions-Zulauf, der einen Anteil des nichtvorgelegten wasserlöslichen Reglers gleichmäßig kontinuierlich zudosiert, wodurch seine Konzentration im Monomeren-Zulauf gleichmäßig zunimmt. Bei dieser bevorzugten Ausführungsform ist es auch möglich, den restlichen Anteil des weder vorgelegten noch von Zulaufbeginn an im Emulsions-Zulauf befindlichen Reglers dem Emulsionszulauf während der Zugabe zum Polymerisationsgemisch in zeitlich zunehmenden Mengen zuzusetzen. Während der Polymerisation wird die Temperatur des Polymerisationsgemischs vorzugsweise bei 45 bis 80°C gehalten. Nach Zulaufende läßt man in an an sich üblicher Weise auspolymerisieren und abkühlen.

Bei dem neuen Verfahren, insbesondere bei seiner bevorzugten Ausführungsform erhält man Polyacrylat-Dispersionen, die bei hervorragender Pigmentverträglichkeit und günstiger Viskosität von meist 100 bis 1000 mPa·s, ein besonders vorteilhaftes Fließverhalten zeigen. Für die Herstellung der Dispersionen wird besonders wenig Schutzkolloid und besonders wenig Regler benötigt. Man erhält wäßrige Polyacrylat-Dispersionen, die sich mit besonderem Vorteil als Bindemittel für Anstrichmittel eignen und die besonders bei der bevorzugten Ausführungsform in hervorragend gleichmäßiger Qualität anfallen.

Die in den folgenden Beispielen angegebenen Teile und Prozente beziehen sich auf das Gewicht.

## Beispiel 1

In einem Reaktionsgefäß, das mit Rührer, Rückflußkühler, Thermometer und drei Zuläufen versehen ist, wird folgende wäßrige Phase als Vorlage vorgelegt:

| | |
|---|---|
| 50 Teile | Wasser, |
| 0,2 Teile | Thioglykolsäure, |
| 4 Teile | 7%ige wäßrige Lösung von Hydroxyäthylcellulose einer Viskosität von 250 mPa·s, |
| 2,5 Teile | Zulauf 1, |
| 1,25 Teile | Zulauf 2, |
| 1,25 Teile | Zulauf 3. |

Zulauf 1:

| | |
|---|---|
| 27,5 Teile | Wasser |
| 55 Teile | Methylmethacrylat |
| 45 Teile | 2-Äthylhexylacrylat |
| 1,5 Teile | Acrylsäure |
| 1 Teil | Acrylamid |
| 4,5 Teile | 20%ige wäßrige Lösung eines mit 25 Mol Äthylenoxid äthoxylierten und sulfonierten p-Isooctylphenols |
| 3 Teile | 20%ige wäßrige Lösung des Natriumsalzes eines 13 bis 17 C-Atome enthaltenden sulfonierten Kohlenwasserstoffgemisches |
| 3 Teile | einer 20%igen wäßrigen Lösung eines mit 12 Mol Äthylenoxid äthoxylierten $C_{14}$- bis $C_{16}$-Alkanol. |

Zulauf 2:

| | |
|---|---|
| 15 Teile | Wasser |
| 0,5 Teile | Kaliumpersulfat |

Zulauf 3:

| | |
|---|---|
| 15 Teile | Wasser |
| 0,1 Teile | Natrium-Formaldehydsulfoxylat |

Die Vorlage wird unter Rühren auf 50°C erwärmt und 15 Minuten polymerisiert. Dann werden die Zuläufe 1 bis 3 innerhalb 2 bis $2^{1}/_{2}$ Stunden gleichmäßig unter Rühren zugefahren. Nach Zulaufende wird noch 2 Stunden nachpolymerisieren lassen und dann nach dem Abkühlen der pH-Wert der erhaltenen Dispersion durch Zugabe von 25%igem wäßrigem Ammoniak auf 8 bis 8,5 gestellt. Die erhaltene wäßrige Polyacrylat-Dispersion ist 45%ig und hat eine Viskosität von 111 mPa·s.

## Beispiel 2

Man arbeitet wie in Beispiel 1 angegeben, verwendet aber anstelle von 0,2 Teilen Thioglykolsäure 3 Teile 2-Buten-1,4-diol als Regler. Man erhält eine wäßrige Polyacrylat-Dispersion, die eine Viskosität von 85 mPa·s hat.

## Beispiel 3

Man arbeitet wie in Beispiel 1 angegeben, verwendet jedoch anstelle der Hydroxyäthylcellulose als Schutzkolloid 0,5 Teile eines 6% seines Gewichts Acetylgruppen aufweisenden handelsüblichen Polyvinylalkohols, dessen 4%ige wäßrige Lösung eine Viskosität von 27 mPa·s besitzt. Man erhält eine 45%ige wäßrige Polyacrylat-Dispersion, deren Viskosität 150 mPa · s beträgt.

## Beispiel 4

Man arbeitet wie in Beispiel 1 angegeben, ersetzt jedoch in Zulauf 1 die zusammen 100 Teile Methylmethacrylat und Äthylhexacrylat durch jeweils 50 Teile Styrol und n-Butylacrylat. Unter sonst gleichen Bedingungen erhält man eine 45%ige wäßrige Dispersion einer Viskosität von 200 mPa·s.

## Beispiel 5

In einem Reaktionsgefäß, wie in Beispiel 1 beschrieben, legt man als Vorlage

| | |
|---|---|
| 51 Teile | Wasser |
| 0,1 Teile | Thioglykolsäure |
| 2 Teile | Hydroxyäthylcellulose (Viskosität der 7%igen wäßrigen Lösung 330 mPa·s) |
| 2,5 Teile | Zulauf 1 |
| 1,25 Teile | Zulauf 2 |
| 1,25 Teile | Zulauf 3 |

vor.

Zulauf 1:

| | |
|---|---|
| 60 Teile . | iso-Butylacrylat |
| 40 Teile | Methacrylsäuremethylester |
| 2,5 Teile | Methacrylsäure |
| 1 Teile | Acrylamid |
| 7,5 Teile | eine 20%igen wäßrigen Lösung eines mit 12 Mol Äthylenoxid äthoxylierten C$_{14}$- bis C$_{16}$-Alkanols |
| 5 Teile | einer 20%igen wäßrigen Lösung eines mit 25 Mol Äthylenoxid äthoxylierten und sulfonierten Isooctylphenols |
| 26 Teile | Wasser |
| 0,1 Teil | Thioglykolsäure |
| 2 Teile | Hydroxyäthylcellulose (wie Vorlage) |

Zulauf 2:

| | |
|---|---|
| 15 Teile | Wasser |
| 0,7 Teile | Kaliumpersulfat |

Zulauf 3:

| | |
|---|---|
| 15 Teile | Wasser |
| 0,1 Teil | Natrium-Formaldehydsulfoxylat |

Man arbeitet im übrigen wie in Beispiel 1 angegeben und erhält eine 45%ige wäßrige Polyacrylat-Dispersion der Viskosität 300 mPa·s.

## Beispiel 6

Man arbeitet wie in Beispiel 5 angegeben, verteilt jedoch die dort insgesamt verwendeten 0,2 Teile Thioglykolsäure wie folgt:

Vorlage:     0,05 Teile
Zulauf 1:    0,05 Teile
Zulauf 4:    0,1 Teil

Man arbeitet nun wie in Beispiel 5 angegeben, läßt jedoch während der Zulaufdauer Zulauf 4 kontinuierlich in Zulauf 1 laufen, so daß die Thioglykolsäure-Konzentration in Zulauf 1 kontinuierlich erhöht wird. Bei sonst gleicher Arbeitsweise erhält man nun eine 45%ige wäßrige Polyacrylat-Dispersion der Viskosität 600 mPa·s.

## Beispiel 7

Man arbeitet, wie in Beispiel 5 angegeben, verwendet jedoch als Monomeres ausschließlich Isobutylacrylat. Man erhält eine 45%ige wäßrige Lösung einer Viskosität von 125 mPa·s.

## Beispiel 8

Man arbeitet, wie in Beispiel 4 angegeben, verwendet jedoch als Monomere in Zulauf 1 10 Teile Vinylpropionat, 40 Teile n-Butylacrylat und 50 Teile Methacrylsäuremethylester. Man erhält unter sonst gleichen Bedingungen eine 45%ige wäßrige Dispersion einer Viskosität von 180 mPa·s.

## Beispiel 9

Man arbeitet, wie in Beispiel 5 angegeben, verwendet aber für Zulauf 1 als Monomeres 60 Teile n-Butylmethacrylat und 40 Teile Methacrylsäuremethylester. Unter sonst gleichen Bedingungen wird eine etwa 45%ige wäßrige Dispersion erhalten, deren Viskosität 140 mPa·s beträgt.

Die Dispersionen der Beispiele 1 bis 9 zeigen gegenüber herkömmlichen »Reinacrylat«-Dispersionen ein deutlich verbessertes Fließverhalten.

## Patentansprüche

1. Verfahren zur Herstellung von wäßrigen Polyacrylat-Dispersionen mit verbessertem Fließverhalten durch Polymerisation von Acryl- und/oder Methacrylsäureestern 1 bis 10 C-Atome enthaltender Alkanole mit 0 bis 50 Gew.-% Styrol und/oder
0 bis 20 Gew.-% Vinylestern und/oder
0 bis 10 Gew.-% wasserlöslichen monoolefinisch ungesättigten Comonomeren unter Emulsionszulauf der Monomeren in wäßriger Emulsion bei 30 bis 95°C in Gegenwart üblicher radikalbildender Polymerisationsinitiatoren, von 0,01 bis 2 Gew.-% Schutzkolloiden, 0,5 bis 5 Gew.-% nichtionischen Emulgatoren und von 0,05 bis 5 Gew.-% Reglern, wobei die Gewichtsprozente jeweils auf die Gesamtmenge der Monomeren bezogen sind, dadurch gekennzeichnet, daß

(a) das Schutzkolloid zumindest zum Teil in einer geringe Anteile der Monomeren enthaltenden wäßrigen Vorlage vorgelegt und

(b) ein wasserlöslicher Regler in Vorlage und gegebenenfalls zusätzlich in Zulauf eingesetzt wird, dessen Löslichkeit in Wasser bei 20°C mindestens 50 g/Liter beträgt.

2. Verfahren nach Anspruch 1, dadurch gekennzeichnet, daß der wasserlösliche Regler dem Polymerisationsgemisch während des Monomerenzulaufs in je Zeiteinheit zunehmenden Mengen zugeführt wird.

**Claims**

1. A process for the preparation of aqueous polyacrylate dispersions having improved flow characteristics, by polymerizing esters of acrylic acid and/or methacrylic acid and alkanols of 1 to 10 carbon atoms with from

    0 to 50% by weight of styrene and/or from
    0 to 20% by weight of vinyl esters and/or from
    0 to 10% by weight of water-soluble, monoolefinically unsaturated comonomers (the monomer feed being in the form of an emulsion),

in aqueous emulsion at from 30 to 95°C in the presence of a conventional free radical polymerization initiator, from 0.01 to 2% by weight of a protective colloid, from 0.5 to 5% by weight of a nonionic emulsifier and from 0.05 to 5% by weight of a regulator, the percentages by weight each being based on the total amount of monomers, characterized in that

a) at least a part of the protective colloid is introduced into an initial aqueous charge containing small proportions of the monomers and
b) a water-soluble regulator whose solubility in water at 20°C is at least 50 g/l is employed in the initial charge and optionally also in the feed.

2. A process as claimed in claim 1, characterized in that the water-soluble regulator is added to the polymerization mixure, during the monomer feed, in increasing amounts per unit time.

**Revendications**

1. Procédé de préparation de dispersions aqueuses de polyacrylates au comportement rhéologique amélioré par polymérisation d'esters de l'acide acrylique et(ou) méthacrylique et d'alcanols en $C_1$ à $C_{10}$ et de

    0 à 50% en poids de styrène et(ou)
    0 à 20% en poids d'esters vinyliques et(ou)
    0 à 10% en poids de comonomères à insaturation oléfinique hydrosolubles,

avec addition des monomères entre 30 et 95°C sous forme d'une émulsion aqueuse, en présence d'initiateurs de polymérisation formant des radicaux usuels, de 0,01 à 2% en poids de colloïdes protecteurs, de 0,5 à 5% en poids d'émulsionnants non ioniques et de 0,05 à 5% en poids de régulateurs, ces pourcentages se rapportant au poids total des monomères, caractérisé en ce que:

(a) le colloïde protecteur se trouve au moins partiellement dans le milieu aqueux de départ contenant des fractions mineures des monomères et
(b) l'on emploie un régulateur hydrosoluble, dont la solubilité dans l'eau à 20°C est d'au moins 50 g/l, dans le milieu de départ et éventuellement aussi dans l'émulsion ajoutée.

2. Procédé suivant la revendication 1, caractérisé en ce que le régulateur hydrosoluble est ajouté au mélange de polymérisation, pendant l'addition des monomères, en des proportions croissantes par unité de temps.